(19) **Europäisches Patentamt / European Patent Office / Office européen des brevets**

(11) **EP 1 985 967 B1**

(12) # EUROPEAN PATENT SPECIFICATION

(45) Date of publication and mention
of the grant of the patent:
**29.07.2009 Bulletin 2009/31**

(51) Int Cl.:
**G01B 9/02** (2006.01)     **G01D 5/353** (2006.01)
**G01J 9/02** (2006.01)

(21) Application number: **07251757.6**

(22) Date of filing: **26.04.2007**

(54) **Fiber interferometric sensor and phase compensation method of PGC demodulator**

Interferometrischer Fasersensor und Verfahren zur Phasenkompensation eines PGC-Demodulators

Capteur interférométrique à fibres et procédé de compensation de phase de démodulateur PGC

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**29.10.2008 Bulletin 2008/44**

(73) Proprietor: **Nxtar Technologies, Inc.**
**Yongkang Industrial Park**
**Tainan (TW)**

(72) Inventors:
• **Huang, Shih-Chu**
**Kaohsiung (TW)**
• **Lin, Hermann**
**Pingtung County 907 (TW)**

(74) Representative: **Johnson, Terence Leslie**
**Marks & Clerk LLP**
**90 Long Acre**
**London**
**WC2E 9RA (GB)**

(56) References cited:
US-A- 5 212 825          US-A1- 2006 181 711
US-B1- 6 449 046

• BING ZHU ET AL: "Multiplexed Optical Fiber Interferometric Sensor System by Synthesis of Optical Coherence Function with Phase Generated Carrier" OPTICAL REVIEW, SPRINGER-VERLAG, BE, vol. 8, no. 2, 1 March 2001 (2001-03-01), pages 107-111, XP019353868 ISSN: 1349-9432

**Description**

BACKGROUND OF THE INVENTION

Field of the Invention

The present invention relates to a fiber interferometric sensor. More particularly, the present invention relates to a fiber interferometric sensor including a phase-generated carrier passive homodyne demodulator (PGC demodulator) having a phase compensation function and a phase compensation method of the PGC demodulator.

Description of Related Art

Common fiber interferometers such as Mach-Zehnder interferometers, Sagnac interferometers, and Michelson interferometers are extremely sensitive sensors, which can be used to sense variations of physical fields such as sound pressure, magnetic field, temperature to creating sensing phase signals.

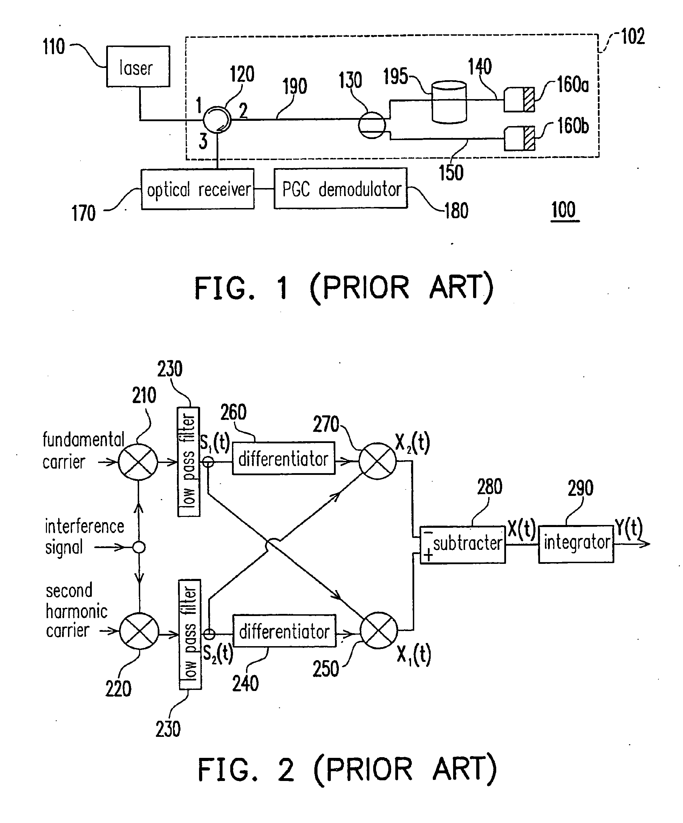

FIG 1 is a schematic view of a conventional fiber interferometric sensor. Referring to FIG 1, the conventional fiber interferometric sensor 100 includes a semiconductor laser 110, an optical receiver 170, a PGC demodulator 180, and a Michelson interferometer 102. The Michelson interferometer 102 includes a 3-port optical circulator 120, a fiber coupler 130, a sensing fiber arm 140, a reference fiber arm 150, two Faraday rotator mirrors (FRMs) 160a, 160b, and a leading fiber 190. A laser light provided by the semiconductor laser 110 enters the 3-port optical circulator 120 through a first port of the 3-port optical circulator 120, and leaves the 3-port optical circulator 120 from a second port of the 3-port optical circulator 120 to be transmitted to the leading fiber 190 and the fiber coupler 130. The laser light is split into two parts after passing through the fiber coupler 130. The two parts of the laser light are respectively delivered to the sensing fiber arm 140 and the reference fiber arm 150, and reflected back to the fiber coupler 130 by the FRMs 160a, 160b connected to the ports of the sensing fiber arm 140 and the reference fiber arm 150. Then, the two parts of the laser light are transmitted back to the second port of the 3-port optical circulator 120 by the leading fiber 190, and then leave from a third port of the 3-port optical circulator 120 to be transmitted to the optical receiver 170.

When the sensing fiber arm 140 is affected by a pressure, strain and refractive index change of the fiber is induced, and a relative optical path difference is generated between the propagation paths of the laser light in the sensing fiber arm 140 and the reference fiber arm 150. An optical interference signal containing a sensing phase signal is generated by an optical phase difference between the sensing fiber arm 140 and the reference fiber arm 150 through the fiber interferometer 102. The optical interference signal is converted into an interference signal in a form of electrical signal by the optical receiver 170.

As described above, if the optical phase difference is $\phi(t)$, the interference signal output by the fiber interferometric sensor 100 is $I(t)=A+B\cos\phi(t)$. If $\phi(t)$ is required to be linearly demodulated from the $I(t)=A+B\cos\phi(t)$, the most common method is a phase-generated carrier passive homodyne demodulation (PGC demodulation). However, the PGC demodulation must generate a high frequency carrier phase signal with fixed amplitude at first.

There are two common methods of generating a carrier phase signal. The first method includes adding a PZT phase modulator 195 on a fiber arm (e.g. the sensing fiber arm 140 or reference fiber arm 150) of the fiber interferometer 102, and driving the PZT phase modulator 195 by using a voltage signal to generate a carrier phase signal $\Delta\phi_0 \sin \omega_c t$. The second method includes applying a current modulation carrier signal $\Delta i \sin \omega_c t$ to the semiconductor laser 110 of the fiber interferometric sensor 100 to generate a carrier phase signal $\Delta\phi(t)$. The $\Delta\phi(t)$ can be expressed as follows:

$$\Delta\phi(t) = \frac{2\pi\Delta Ln}{c}\Delta i\frac{\delta v}{\delta i}\sin\omega_c t \text{ , if } \frac{2\pi\Delta Ln}{c}\Delta i\frac{\delta v}{\delta i} = \Delta\phi_0 \text{, then } \Delta\phi(t) = \Delta\phi_0 \sin\omega_c t \text{ .}$$

$n$ in the above equation is the refractive index of the fiber core, c is the light velocity, $\dfrac{\delta v}{\delta i}$ is the effective current to frequency conversion factor of the semiconductor laser 110. Furthermore, $\Delta L$ is the path imbalance between the two fiber arms 140, 150 of the fiber interferometer 102.

Accordingly, after a carrier phase signal is added, the interference signal $I(t)$ output by the fiber interferometric sensor 100 may be expressed as follows:

$$I(t) = A + B\cos[\phi(t) + \Delta\phi_0 \sin\omega_c t] \qquad \text{Equation (1)}$$

The following Equation (2) can be obtained after using the Bessel function to expand the Equation (1):

$$I(t) = A + B\left\{\left[J_0(\Delta\phi_0) + 2\sum_{n=1}^{\infty} J_{2n}(\Delta\phi_0)\cos 2(n\omega_c t)\right]\cos\phi(t) - \left[2\sum_{n=0}^{\infty} J_{2n+1}(\Delta\phi_0)\sin((2n+1)\omega_c t)\right]\sin\phi(t)\right\}$$

$$\text{Equation (2)}$$

FIG. 2 is a flow chart of the conventional PGC demodulation. Referring to FIG. 1 and FIG. 2, the PGC demodulator 180 performs the PGC demodulation on the interference signal $I(t)$, and the steps of the PGC demodulation will be illustrated below. At first, in the PGC demodulation, a fundamental carrier $\sin\omega_c t$ and a second harmonic carrier $\cos 2\omega_c t$ are multiplied with the interference signal as shown by Equation (2) by a multiplier 210 and a multiplier 220, respectively. The high frequency is filtered out by low pass filters 230 respectively to obtain the amplitude of the component $S_1(t)$ in the interference signal $I(t)$ at the fundamental carrier and the amplitude of the component $S_2(t)$ in $I(t)$ at othe second harmonic carrier, as shown by Equation (3) and Equation (4):

$$S_1(t) = -BJ_1(\Delta\phi_0)\sin\phi(t) \qquad \text{Equation (3)}$$

$$S_2(t) = BJ_2(\Delta\phi_0)\cos\phi(t) \qquad \text{Equation (4)}$$

Next, the Equation (4) is differentiated by a differentiator 240, and the differentiated Equation (4) is multiplied with the Equation (3) by a multiplier 250 to obtain an Equation (5). Furthermore, the Equation (3) is differentiated by a differentiator 260, and the differentiated Equation (3) is multiplied with the Equation (4) by a multiplier 270 to obtain an Equation (6).

$$X_1(t) = B^2 J_1(\Delta\phi_0) J_2(\Delta\phi_0) \frac{\partial\phi(t)}{\partial t}\sin^2\phi(t) \qquad \text{Equation (5)}$$

$$X_2(t) = -B^2 J_1(\Delta\phi_0) J_2(\Delta\phi_0) \frac{\partial\phi(t)}{\partial t}\cos^2\phi(t) \qquad \text{Equation (6)}$$

Thereafter, the Equation (6) is subtracted from the Equation (5) by a subtracter 280 to obtain the following Equation (7):

$$X(t) = X_1(t) - X_2(t) = B^2 J_1(\Delta\phi_0) J_2(\Delta\phi_0) \frac{\partial\phi(t)}{\partial t} \qquad \text{Equation (7)}$$

Then, the Equation (7) is integrated by an integrator 290 to obtain a desired sensing phase signal Y(t), as shown by Equation (8):

$$Y(t) = B^2 J_1(\Delta\phi_0) J_2(\Delta\phi_0) \, \phi(t) \qquad \text{Equation (8)}$$

It should be noted that the interference signal including the carrier phase signal expressed by the aforementioned Equation (2) does not include a transmission delay caused when the light is transmitted in the leading fiber 190 of the fiber interferometer 102. However, in the practical application, the existence of the leading fiber 190 is hard to avoid. From another point of view, as a little loss is caused when the light is transmitted in the fiber, it is allowed to use a very long leading fiber 190, which is one of the important advantages of the fiber interferometer 102. During the laser light transmitted from the semiconductor laser 110 to the optical reciver 170, the total path length of the laser light transmitted in the leading fiber 190 is L, and the time delay $\Delta t$ generated by the transmission of the laser light in the leading fiber 190 can be expressed as follows:

$$\Delta t = \frac{nL}{c} \qquad \text{Equation (9)}$$

In the Equation (9), $n$ is the refractive index of the fiber core, and c is the light velocity. Considering the time delay $\Delta t$ generated by the transmission of the laser light in the leading fiber 190, the Equation (2) is rewritten as Equation (10):

$$I(t) = A + B\left\{\left[J_0(\phi_c) + 2\sum_{n=1}^{\infty} J_{2n}(\Delta\phi_0)\cos 2(n\omega_c(t+\Delta t))\right]\cos\phi - \left[2\sum_{n=0}^{\infty} J_{2n+1}(\Delta\phi_0)\sin((2n+1)\omega_c(t+\Delta t))\right]\sin\phi\right\}$$

$$\text{Equation (10)}$$

The fundamental carrier sin $\omega_c t$ and the second harmonic carrier cos $2\omega_c t$ are multiplied with the interference signal as shown by the Equation (10) by the multiplier 210 and the multiplier 220 respectively, and the high frequency is filtered out by the low pass filters 230 , and then $S_1(t)$ and $S_2(t)$ are changed to Equation (11) and Equation (12):

$$S_1(t) = -BJ_1(\Delta\phi_0)\cos(\omega_c\Delta t)\sin\phi(t) \qquad \text{Equation (11)}$$

$$S_2(t) = BJ_2(\Delta\phi_0)\cos(2\omega_c\Delta t)\cos\phi(t) \qquad \text{Equation (12)}$$

After being operated by the differentiators 240, 260, multipliers 250, 270, subtracter 280, and integrator 290, the sensing phase signal obtained by the PGC demodulation is changed to Equation (13):

$$Y(t) = B^2 J_1(\Delta\phi_0) J_2(\Delta\phi_0)\cos(\omega_c\Delta t)\cos(2\omega_c\Delta t)\,\phi(t) \qquad \text{Equation (13)}$$

By comparing the Equation (8) with the Equation (13), it may be found that $\cos(\omega_c\Delta t)\cos(2\omega_c\Delta t)$ is added in the Equation (13). As $-1 \le \cos(\omega_c\Delta t)\cos(2\omega_c\Delta t) \le 1$, the amplitude of the sensing phase signal obtained by the PGC demodulation would become smaller, after considering the time delay $\Delta t$ caused by the transmission of the laser light in the leading fiber 190. In other words, the signal-to-noise ratio (S/N) of the demodulated sensing phase signal would be reduced, and in a most serious case, the amplitude of the demodulated sensing phase signal would even be zero.
Thus, in the PGC demodulation process, the delay effect caused by the transmission of the laser light in the leading fiber 190 must be properly compensated, such that the amplitude of the sensing phase signal output by the PGC demodulator 180 is kept at a maximum value, i.e., the sensing phase signal has a most preferred signal-to-noise ratio.

## SUMMARY OF THE INVENTION

The present invention provides a fiber interferometric sensor, which outputs the sensing phase signal having a preferred signal-to-noise ratio.

The present invention provides a phase compensation method of a PGC demodulator for a fiber interferometric sensor, so as to make the sensing phase signal output by the fiber interferometric sensor have a preferred signal-to-noise ratio.

The invention is defined in independent claims 1 and 9.

The present invention provides a fiber interferometric sensor, which includes a light source, at least one fiber interferometer, at least one optical receiver, and at least one PGC demodulator having a phase compensation function. The fiber interferometer is coupled to the light source, and is suitable for outputting an optical interference signal according to the sensed variation of physical fields. The optical receiver is coupled to the fiber interferometer, and is suitable for converting the optical interference signal into an electrical signal. Furthermore, the PGC demodulator having a phase compensation function is coupled to the optical receiver, and is suitable for demodulating the electrical signal to generate a sensing phase signal. The PGC demodulator having a phase compensation function has a processing unit and two phase compensators, and the processing unit is suitable for generating a fundamental carrier and a second harmonic carrier to demodulate the electrical signal. One of the phase compensators is suitable for compensating a first phase angle for the fundamental carrier, and the other phase compensator is suitable for compensating a second phase angle for the second harmonic carrier.

In an embodiment of the present invention, the fiber interferometer described above can be a Michelson interferometer, a Mach-Zehnder interferometer, or a Sagnac interferometer.

In an embodiment of the present invention, the fiber interferometer includes a 3-port optical circulator, a fiber coupler, a leading fiber, two fiber arms, and two reflecting components. The 3-port optical circulator has a first port, a second port, and a third port, wherein the light source is coupled to the first port, and the optical receiver is coupled to the third port. The leading fiber is coupled between a port of the fiber coupler and the second port. A port of each fiber arm is coupled to the other port of the fiber coupler, and the reflecting components are coupled to the other port of either fiber arm, respectively.

In an embodiment of the present invention, the fiber interferometric sensor further includes a PZT phase modulator coupled to one of the fiber arms.

In an embodiment of the present invention, the fiber interferometric sensor further includes a function generator coupled to the light source.

In an embodiment of the present invention, the reflecting components are FRMs.

In an embodiment of the present invention, the first phase angle is between 0° and 180°, and the second phase angle is between 0° and 180°.

In an embodiment of the present invention, the light source is a laser.

The present invention further provides a phase compensation method of a PGC demodulator for a fiber interferometric sensor. The phase compensation method of the PGC demodulator includes the following steps. First, a carrier phase signal is generated by the fiber interferometric sensor and a simulation signal is input into the fiber interferometric sensor to generate an electrical signal. Thereafter, a first carrier and a second carrier are generated by a PGC demodulator having a phase compensation function of the fiber interferometric sensor for demodulating the electrical signal. Then, a first reference phase angle is compensated for the first carrier, and a plurality of different phase angles are compensated for the second carrier, so as to find out a phase angle compensated for the second carrier when the intensity of a demodulated output simulation signal is a first relative maximum value. Afterwards, a second reference phase angle is compensated for the first carrier, and a plurality of different phase angles are compensated for the second carrier, so as to find out a phase angle compensated for the second carrier when the intensity of the output simulation signal is a second relative maximum value. Then, the greater one of the first relative maximum value and the second relative maximum value is found out to determine a phase angle θ1 to be compensated for the second carrier. Then, the phase angle θ1 is compensated for the second carrier, and a plurality of different phase angles are compensated for the first carrier, so as to find out a phase angle θ2 compensated for the first carrier when the intensity of the output simulation signal is a third relative maximum value. The phase angle θ2 is a phase angle to be compensated for the first carrier.

In an embodiment of the present invention, the first carrier described above is a fundamental carrier, and the second carrier is a second harmonic carrier.

In an embodiment of the present invention, the first carrier is a second harmonic carrier, and the second carrier is a fundamental carrier.

In an embodiment of the present invention, the process of inputting the simulation signal into the fiber interferometric sensor involves inputting the simulation signal into the fiber interferometric sensor by a PZT phase modulator.

In an embodiment of the present invention, the process of inputting the simulation signal into the fiber interferometric sensor involves performing a current modulation on a light source of the fiber interferometric sensor to generate a simulation signal.

In an embodiment of the present invention, the first reference phase angle and the second reference phase angle differ by 90°.

In an embodiment of the present invention, the first reference phase angle is 0°, and the second reference phase angle is 90°.

In an embodiment of the present invention, the process of compensating the first carrier and the second carrier described above involves compensating the first carrier and the second carrier by two phase compensators of the PGC demodulator having a phase compensation function, respectively.

In the fiber interferometric sensor and the phase compensation method of the PGC demodulator of the present invention, phase angles are compensated for the fundamental carrier and the second harmonic carrier by two phase compensators respectively, so the intensity of the sensing phase signal output by the fiber interferometric sensor can be kept at a maximum value, and thus the sensing phase signal has a preferred signal-to-noise ratio.

BRIEF DESCRIPTION OF THE DRAWINGS

The accompanying drawings are included to provide a further understanding of the invention, and are incorporated in and constitute a part of this specification. The drawings illustrate embodiments of the invention and, together with the description, serve to explain the principles of the invention.

FIG. 1 is a schematic view of a conventional fiber interferometric sensor.

FIG. 2 is a flow chart of a conventional PGC demodulation.

FIG. 3A is a flow chart of a PGC demodulation according to an embodiment of the present invention.

FIG 3B is a schematic view of a fiber interferometric sensor according to an embodiment of the present invention.

FIG 4 is a flow chart of the steps of a phase compensation method of a PGC demodulator according to an embodiment of the present invention.

FIG 5 is waveforms of the fundamental square wave, the fundamental carrier signal, and some instantaneous interference signal.

FIG 6 is an oscillogram of the simulation signal and the demodulated output simulation phase signal after compensation when the leading fiber has a length of 0 meter.

FIG 7 is an oscillogram of the simulation signal and the demodulated output simulation phase signal without compensation when the leading fiber has a length of 400 meters.

FIG. 8 is an oscillogram is the simulation signal and the demodulated output simulation phase signal after compensation when the leading fiber has a length of 400 meters.

FIG. 9 is a schematic view of the fiber interferometric sensor according to another embodiment of the present invention.

DESCRIPTION OF EMBODIMENTS

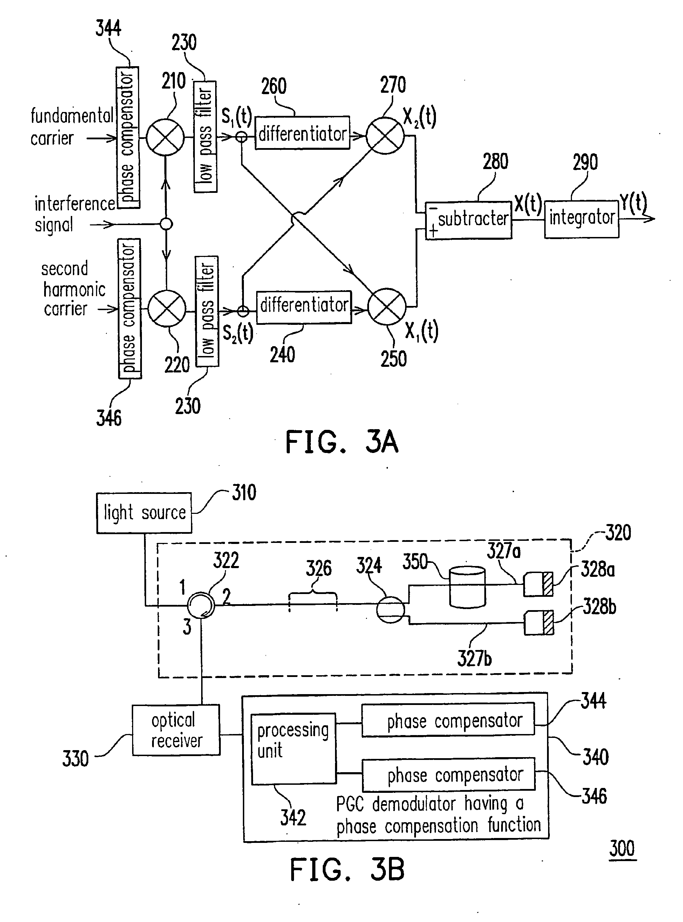

FIG 3A is a schematic diagram of the steps of a PGC demodulation according to an embodiment of the present invention. Referring to FIG 3A, the difference between the steps of the PGC demodulation of the present invention and the conventional technology (as shown in FIG 2) is mainly in that the fundamental carrier $\sin\omega_c t$ (or the fundamental square wave) and the second harmonic carrier $\cos 2\omega_c t$ (or the second harmonic square wave) in the PGC demodulation are delayed by $\Delta t$ in the present invention, so as to solve the effect of the leading fiber on the PGC demodulation. In an actual implementation, a phase angle $\omega_c \Delta t$ (rad) is compensated for the fundamental carrier $\sin\omega_c t$ (or the fundamental square wave) generated by the PGC demodulator by a phase compensator 344, and a phase angle $2\omega_c \Delta t$ (rad) is compensated for the second harmonic carrier $\cos 2\omega_c t$ (or the second harmonic square wave) generated by the PGC demodulator by the other phase compensator 346. From theoretical analysis, if the sign of the sensing phase signal output by the PGC demodulation is not considered, the amplitude of the sensing phase signal output by the PGC demodulator can be kept at a maximum value, as long as the phase angle $\omega_c \Delta t$ and the phase angle $2\omega_c \Delta t$ range from 0° to 180°.

Thus, the phase angle compensation ranges of the fundamental carrier $\sin\omega_c t$ (or the fundamental square wave) and the second harmonic carrier $\cos 2\omega_c t$ (or the second harmonic square wave) of the present invention are both between 0° and 180°. An embodiment of the fiber interferometric sensor is taken to illustrate the present invention below. Michelson interferometer is taken as an example of the fiber interferometer of this fiber interferometric sensor, but the fiber interferometric sensor of the present invention is not limited to the Michelson interferometer, and Mach-Zehnder interferometer, Sagnac interferometer, or other fiber interferometers using a PGC demodulation can also be used.

FIG. 3B is a schematic view of the fiber interferometric sensor according to an embodiment of the present invention. Referring to FIG 3B, the fiber interferometric sensor 300 of the present embodiment includes a light source 310, a fiber interferometer 320, an optical receiver 330, and a PGC demodulator 340 having a phase compensation function. The fiber interferometer 320 is coupled to the light source 310, and is suitable for outputting an optical interference signal according to the sensed variation of physical fields. The optical receiver 330 is coupled to the fiber interferometer 320, and is suitable for converting the optical interference signal into an electrical signal. Furthermore, the PGC demodulator 340 having a phase compensation function is coupled to the optical receiver 330, and is suitable for demodulating the electrical signal to generate a sensing phase signal. The PGC demodulator 340 having a phase compensation function has a processing unit 342 and two phase compensators 344, 346. The processing unit 342 is suitable for generating a fundamental carrier and a second harmonic carrier to demodulate the electrical signal. One of the phase compensators (e.g., the phase compensator 344) is suitable for compensating a first phase angle for the fundamental carrier, and the other phase compensator (e.g., the phase compensator 346) is suitable for compensating a second phase angle for the second harmonic carrier.

In this embodiment, the fiber interferometer 320 includes a 3-port optical circulator 322, a fiber coupler 324, a leading fiber 326, two fiber arms 327a, 327b, and two reflecting components 328a, 328b. The 3-port optical circulator 322 has a first port, a second port, and a third port. The light source 310 is coupled to the first port, and the optical receiver 330 is coupled to the third port. The leading fiber 326 is coupled between a port of the fiber coupler 324 and the second port. A port of each one of the fiber arms 327a, 327b is coupled to the other port of the fiber coupler 324, the reflecting component 328a is coupled to the other port of the fiber arm 327a, and the reflecting component 328b is coupled to the other port of the fiber arm 327b. Furthermore, the light source 310 is, for example, a laser, and the reflecting component 328b is, for example, a Faraday rotator mirror (FRM).

As described above, the fiber arm 327a is, for example, a sensing fiber arm, and the fiber arm 327b can be a reference fiber arm or another sensing fiber arm. When the fiber arm 327a is affected by a pressure, strain and refractive index change of the fiber is induced, and an optical path difference may be caused between the propagation paths of the laser light provided by the laser 310 in the fiber arm 327a and the fiber arm 327b. The fiber interferometer 320 is used to generate an optical interference signal having a sensing phase signal by the optical phase difference between the fiber arm 327a and the fiber arm 327b. The optical receiver 330 can be used to convert the optical interference signal into an electrical signal, and the PGC demodulator 340 having a phase compensation function can perform a PGC demodulation on the electrical signal to generate a sensing phase signal.

Furthermore, the fiber interferometric sensor 300, for example, further includes a PZT phase modulator 350, which can be coupled to the fiber arm 327a or the fiber arm 327b. The PZT phase modulator 350 is used to generate a carrier phase signal. It should be noted that a function generator (not shown) coupled to the light source 310 can also be used in this embodiment to generate a carrier phase signal without using a PZT phase modulator 350.

In view of that the amplitude of the sensing phase signal demodulated by the conventional PGC demodulation technology may be zero, two phase compensators 344, 346 are added to the PGC demodulator 340 having a phase compensation function in this embodiment to perform a phase compensation on the fundamental carrier and the second harmonic carrier, such that the sensing phase signal demodulated by the PGC demodulation has a maximum amplitude (intensity).

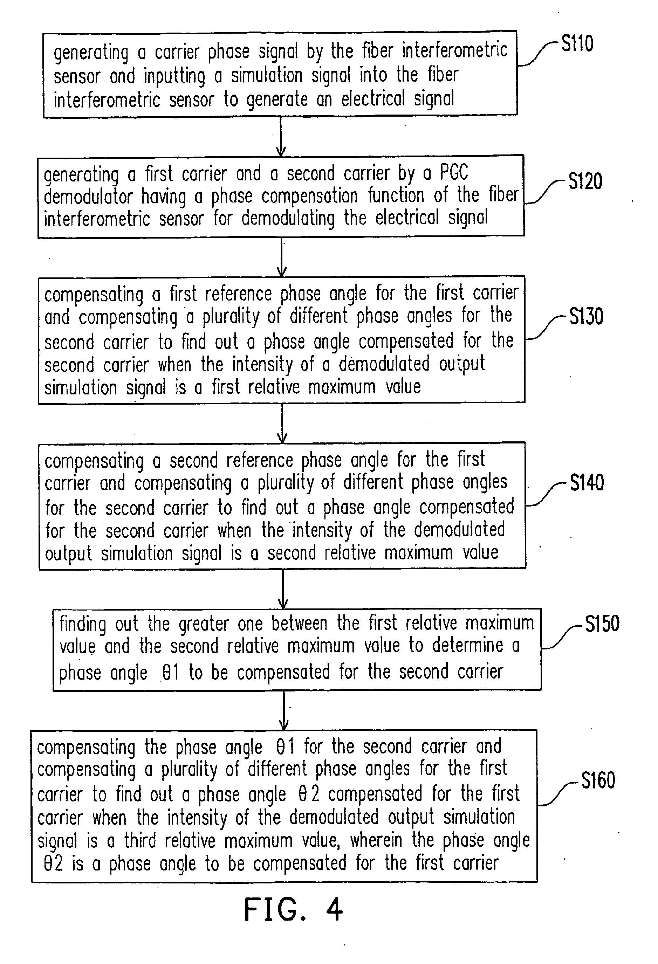

Referring to FIGs. 3B and 4, a phase compensation method of the PGC demodulator according to an embodiment of the present invention is illustrated below. FIG 4 is a flow chart of the steps of the phase compensation method of the PGC demodulator according to an embodiment of the present invention. Furthermore, in this embodiment, two fiber arms 327a, 327b has a path imbalance of, for example, 10 centimeters, and the phase compensators 344, 346 are, for example, 4-bit phase compensators. The compensation angles (measured compensation angles) at each scale of this 4-bit phase compensator are as shown in Table 1.

Table 1

| Scale | Measured Compensation Angle (°) |
|-------|---------------------------------|
| 0000  | 0.3                             |
| 0001  | 5.8                             |
| 0010  | 17.1                            |
| 0011  | 28.4                            |
| 0100  | 39.5                            |
| 0101  | 50.8                            |
| 0110  | 62.1                            |
| 0111  | 73.4                            |

(continued)

| Scale | Measured Compensation Angle (°) |
|-------|--------------------------------|
| 1000  | 84.7                           |
| 1001  | 95.6                           |
| 1010  | 107.1                          |
| 1011  | 118.3                          |
| 1100  | 129.6                          |
| 1101  | 140.9                          |
| 1110  | 152.1                          |
| 1111  | 163.4                          |

Additionally, the leading fiber 326 having a length of 0 meter is taken as an example below, since even if the length of the leading fiber 326 is 0 meter, some basic phase differences are still generated in the demodulation circuit of the PGC demodulator 340 having a phase compensation function and the optical path of the fiber interferometer 320.

The phase compensation method of the demodulator of this embodiment includes the following steps. First, as shown in Step S110, a carrier phase signal is generated by the fiber interferometric sensor 300 and a simulation signal is input into the fiber interferometric sensor 300 to generate an electrical signal. Hereinafter, as shown in Step S120, a first carrier and a second carrier are generated by the PGC demodulator 340 having a phase compensation function of the fiber interferometric sensor 300 to demodulate the electrical signal.

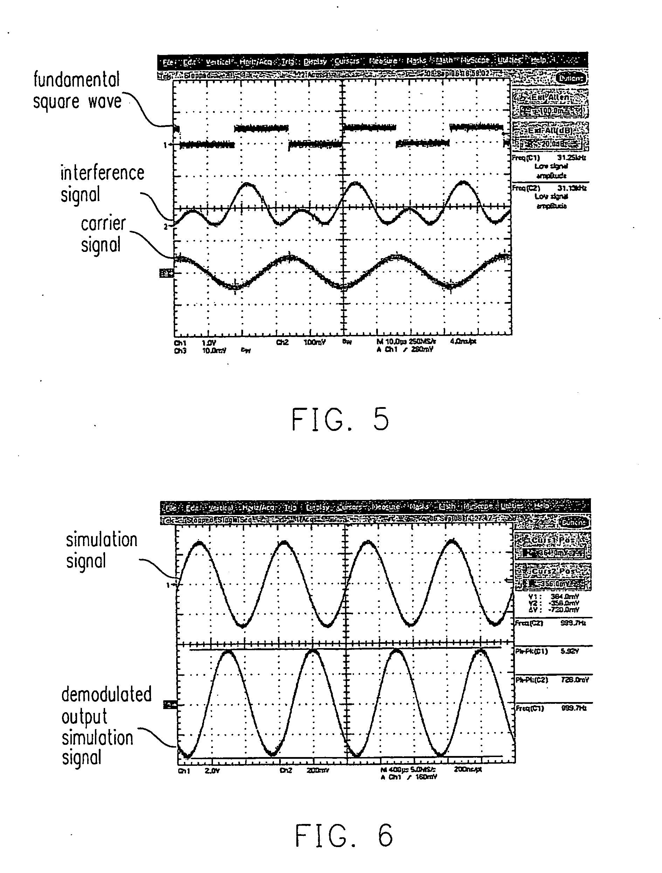

In detail, in this embodiment, a low frequency simulation signal of 1 kHz is applied to the PZT phase modulator 350 to generate an electrical signal. The amplitude $V_{pp}$ of the low frequency simulation signal is, for example, 2.8V. The average output light power of the fiber interferometer 320 is, for example, 300 μW. Furthermore, in this embodiment, the first carrier and the second carrier are a fundamental carrier and a second harmonic carrier respectively, but the first carrier and the second carrier can also be a second harmonic carrier and a fundamental carrier respectively. Furthermore, in this embodiment, a carrier frequency of 31.25 kHz is used as a carrier signal for modulating the light source 310. FIG. 5 shows waveforms of a fundamental square wave, a fundamental carrier signal, and some instantaneous interference signal. It is to be noted that in the fiber interferometric sensor without using a PZT phase modulator, this simulation signal can be generated by performing a current modulation on the light source 310.

Then, as shown in Step S130, a first reference phase angle is compensated for the first carrier, and a plurality of different phase angles are compensated for the second carrier, so as to find out a phase angle compensated for the second carrier when the amplitude (intensity) of a demodulated output simulation signal is a first relative maximum value. In this embodiment, the first carrier and the second carrier can be compensated by the phase compensator 344 and the phase compensator 346 respectively. In particular, the scale of the phase compensator 344 is fixed to (0000) to compensate the first reference phase angle for the first carrier. The scale of the phase compensator 346 is adjusted from (0000) to (1111) according to the sequence listed in Table 1, so as to compensate a plurality of different phase angles for the second carrier. Also, the amplitudes of the demodulated output simulation signals when the phase compensator 346 is adjusted to each scale are recorded, as shown in Table 2. It can be seen from Table 2 that the first relative maximum peak-to-peak value (double amplitude) of the demodulated output simulation signal is 376 mV, and at this situation the phase angle compensated for the second carrier is 129.6°.

Table 2

| Scale | Peak-to-peak value of the demodulated output simulation signal (mV) |
|-------|---------------------------------------------------------------------|
| 0000  | 352                                                                 |
| 0001  | 332                                                                 |
| 0010  | 296                                                                 |
| 0011  | 256                                                                 |
| 0100  | 180                                                                 |
| 0101  | 116                                                                 |
| 0110  | →0                                                                  |

(continued)

| Scale | Peak-to-peak value of the demodulated output simulation signal (mV) |
|---|---|
| 0111 | →0 |
| 1000 | 128 |
| 1001 | 196 |
| 1010 | 256 |
| 1011 | 296 |
| 1100 | 340 |
| 1101 | 364 |
| 1110 | 376 |
| 1111 | 370 |

Then, as shown in Step S140, a second reference phase angle is compensated for the first carrier, and a plurality of different phase angles are compensated for the second carrier, so as to find out a phase angle compensated for the second carrier when the intensity of the demodulated output simulation signal is a second relative maximum value. The first reference phase angle and the second reference phase angle differ by, for example, about 90°, for example, the first reference phase angle is about 0°, and the second reference phase angle is about 90°. In particular, the scale of the phase compensator 344 is fixed to (1000), so as to compensate a second reference phase angle for the first carrier. The scale of the phase compensator 346 is adjusted from (0000) to (1111) according to the sequence listed in Table 1, so as to compensate a plurality of different phase angles for the second carrier. Also, the peak-to-peak values of the demodulated output simulation signals when the phase compensator 346 is adjusted to each scale are recorded, as shown in Table 3. It can be seen from Table 3 that, the second relative maximum peak-to-peak value of the demodulated output simulation signal is 544 mV, and at this situation, the phase angle compensated for the second carrier is 152.1°.

Table 3

| Scale | Peak-to-peak value of the demodulated output simulation signal (mV) |
|---|---|
| 000 | 500 |
| 0001 | 464 |
| 0010 | 416 |
| 0011 | 352 |
| 0100 | 260 |
| 0101 | 180 |
| 0110 | → 0 |
| 0111 | → 0 |
| 1000 | 184 |
| 1001 | 260 |
| 1010 | 360 |
| 1011 | 412 |
| 1100 | 480 |
| 1101 | 524 |
| 1110 | 544 |
| 1111 | 516 |

Then, as shown in Step S150, the greater one of the first relative maximum value and the second relative maximum value is found out to determine a phase angle θ1 to be compensated for the second carrier. In this embodiment, the second maximum value is greater than the first relative maximum value, so the phase angle θ1 to be compensated for the second carrier is 152.1°.

Then, as shown in Step S160, the phase angle θ1 is compensated for the second carrier, and a plurality of different phase angles are compensated for the first carrier, so as to find out a phase angle θ2 compensated for the first carrier when the intensity of the demodulated output simulation signal is a third relative maximum value, and the phase angle θ2 is a phase angle to be compensated for the first carrier. In particular, the scale of the phase compensator 344 is adjusted from (0000) to (1111) according to the sequence listed in Table 1, so as to compensate a plurality of different phase angles for the first carrier. Also, the peak-to-peak values of the demodulated output simulation signals when the phase compensator 344 is adjusted to each scale are recorded, as shown in Table 4. It can be seen from Table 4 that the third relative maximum peak-to-peak value of the demodulated output simulation signal is 720 mV, so the phase angle θ2 to be compensated for the first carrier is 129.6°.

Table 4

| Scale | Peak-to-peak value of the demodulated output simulation signal (mV) |
|-------|----------------------------------------------------------------------|
| 0000  | 412                                                                  |
| 0001  | 344                                                                  |
| 0010  | 228                                                                  |
| 0011  | → 0                                                                  |
| 0100  | → 0                                                                  |
| 0101  | 212                                                                  |
| 0110  | 316                                                                  |
| 0111  | 452                                                                  |
| 1000  | 580                                                                  |
| 1001  | 700                                                                  |
| 1010  | 710                                                                  |
| 1011  | 710                                                                  |
| 1100  | 720                                                                  |
| 1101  | 690                                                                  |
| 1110  | 650                                                                  |
| 1111  | 544                                                                  |

FIG 6 is an oscillogram of the simulation signal and the demodulated output simulation signal after compensation when the leading fiber has a length of 0 meter. It can be seen from FIG. 6 that after the phase angle compensation, the demodulated output simulation signal has a greater amplitude.

Although the above experimental data are obtained according to the length of the leading fiber 326 being 0 meter for example, actually the phase angle compensations for the fundamental carrier and the second harmonic carrier can be accomplished to make the output signal demodulated by the PGC have a maximum amplitude, as long as the above steps S110 to S160 are performed, in despite of the length of the leading fiber 326. Furthermore, the above steps may be accomplished automatically by the processing unit 342 and the phase compensators 344, 346 in the PGC demodulator 340 having a phase compensation function. Further, the simulation signal is required only when an automatic phase angle delay compensation correction is carried out by the fiber interferometric sensor 100, and then shut down after finishing the correction so as to avoid influencing the detection of the fiber interferometric sensor 300.

After adding a leading fiber 326, as the light power is fixed (i.e., the average output light power of the fiber interferometer 320 is still adjusted to 300 μW), the amplitude of the demodulated output simulation signal after compensation is also fixed. Leading fibers with different lengths are used to make an experiment below, so as to validate whether the peak-to-peak value of the demodulated output simulation signal after compensation is equal to 720 mV. Assuming that the leading fiber 326 of the fiber interferometric sensor 300 has a length of $L$, when using a carrier frequency $f_c$ = 31.25kHz, the phase angle $\phi_{d1} = \omega_c \Delta t$ and $\phi_{d2} = 2\omega_c \Delta t$ delayed for the fundamental carrier and the second harmonic carrier may be expressed as follows, respectively:

$$\phi_{d1} = \frac{2\pi f_c n(2L)}{c} = \frac{4\pi f_c nL}{c}$$

$$\phi_{d2} = \frac{2\pi(2f_c)n(2L)}{c} = \frac{8\pi f_c nL}{c}$$

The theoretical compensation values and experimental values for the leading fibers 326 with different lengths are as follows respectively.

(1) When the leading fiber 326 has a length of 200 meters, the initial peak-to-peak value of the demodulated output simulation signal without compensation is 504 mV. The calculated theoretical value of the compensation angle for the fundamental carrier is $\phi_{d1} = 22.5^0$, and the theoretical value of the compensation angle for the second harmonic carrier is $\phi_{d2} = 45^0$. The actual compensation results are as follows: the scale of the phase compensator compensating the fundamental carrier is adjusted from (1100) to (1110), i.e., equivalent to compensating 22.5°, and the scale of the phase compensator compensating the second harmonic carrier is adjusted from the (1110) to (0010). The reason for the compensation angle being smaller than the angle before adjustment is that the second harmonic carrier of the interference signal is 152.1° at the scale (1110) and it is equal to 197.1° as the leading fiber is delayed by 45°, and the phase of the second harmonic carrier $\cos 2\omega_c t$ is set to 17.1° at the scale (0010), such that the two differ by 197.1°-17.1°=180°, so the sign of the demodulated output simulation signal would be reversed, but the peak-to-peak value is the greatest (720 mV). Thus, the experimental value is same with the theoretically predicted value.

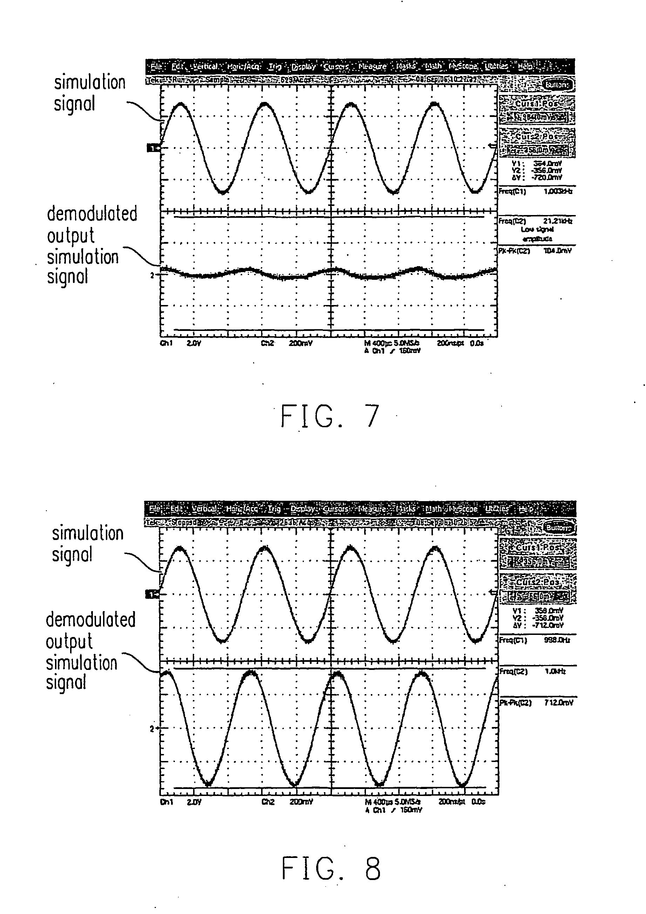

(2) When the leading fiber 326 has a length of 400 meters, the calculated theoretical value of the compensation angle for the fundamental carrier is $\phi_{d1} = 45^0$, and the theoretical value of the compensation angle for the second harmonic carrier is $\phi_{d2} = 90^\circ$. Due to $\phi_{d2} = 90^\circ$ , it can be predicted from Equation (13) that before the compensation, the amplitude of the sensing phase signal demodulated by the PGC should be zero, and the peak-to-peak value of the demodulated output simulation signal without compensation (as shown in FIG 7) is measured to approach to 0. The actual compensation result is as follows: the scale of the phase compensator compensating the fundamental carrier is adjusted from (1100) to (1111), i.e., equivalent to adjusting by 39.5°, and the scale of the phase compensator compensating the second harmonic carrier is adjusted from (1110) to (0110), and 152.1°+90°-62.1°=180°, so the peak-to-peak value of the demodulated output simulation signal after compensation is the greatest, the compensated waveform is as shown in FIG 8, and the maximum peak-to-peak value is 712 mV.

It should be noted that there is some error between the calculated compensation angle (45°) and the actual compensation angle (39.5°) of the fundamental carrier, which is mainly caused by the imprecision of the phase compensator used (seen from the data in Table 1). Thus, the experimental value is still quite close to the theoretically predicted value.

(3) When the leading fiber 326 has a length of 600 meters, the initial peak-to-peak value of the demodulated output simulation signal without compensation is 252 mV. The calculated theoretical value of the compensation angle for the fundamental carrier is $\phi_{d1} = 67.5^0$, and the theoretical value of the compensation angle for the second harmonic carrier is $\phi_{d2} = 135^0$, and the actual compensation result is as follows: the scale of the phase compensator compensating the fundamental carrier is adjusted from (1100) to (0010), and 129.6°+67.5°-17.1°=180°, so the peak-to-peak value of the demodulation output simulation signal after compensated is the greatest (720 mV). The scale of the phase compensator compensating the second harmonic carrier is adjusted from (1110) to (1010), and 152.1°+135°-107.1°=180°, so the peak-to-peak value of the demodulated output simulation signal with compensation is the greatest (720 mV). Thus, the experimental value is same with the theoretically predicted value.

(4) When the leading fiber 326 has a length of 800 meters, the calculated theoretical value of the compensation angle for the fundamental carrier is $\phi_{d1} = 90^\circ$ , and the theoretical value of the compensation angle for the second harmonic carrier is $\phi_{d2} = 180^\circ$ . Due to $\phi_{d1} = 90^\circ$ , it can be predicted from the Equation (13) that before the compensation, the amplitude of the sensing phase signal demodulated by the PGC should be zero, and the peak-to-peak value of the demodulated output simulation signal without compensation approaches to 0. The actual compensation result is as follows: the scale of the phase compensator compensating the fundamental carrier is adjusted from (1100) to (0100), and 129.6°+90°-39.5°=180.1°, so the peak-to-peak value of the demodulated output simulation signal after compensation is the greatest. The scale of the phase compensator for compensating the second harmonic carrier is at (1110) and can obtain a maximum peak-to-peak value of 720 mV without adjustment. It is originally needed to adjust by 180°, but an adjustment of 180° only changes the sign, so no adjustment is required if the sign is not considered. Thus, the experimental value is the same with the theoretically predicted value.

It is to be noted that, the present invention does not limit the phase compensator to a 4-bit phase compensator. The resolution of the phase compensator may be adjusted according to requirements, for example, the resolution of the phase compensator may be adjusted to around 1°. Furthermore, although the fiber interferometric sensor 300 described above only includes one fiber interferometer, the fiber interferometric sensor of the present invention may also include a plurality of fiber interferometers.

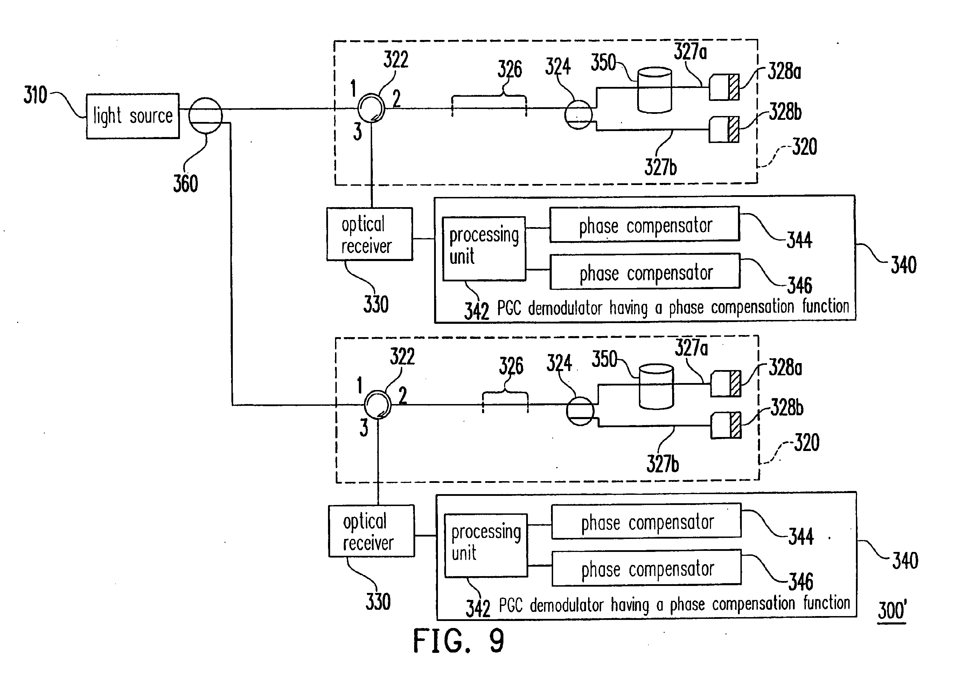

FIG 9 is a schematic view of the fiber interferometric sensor according to another embodiment of the present invention. Referring to FIG 9, the fiber interferometric sensor 300' of this embodiment may include a plurality of the fiber interferometers 320 (FIG 9 shows two fiber interferometers 320 as an example), a plurality of optical receivers 330 (FIG 9 shows two optical receivers 330 as an example), and a plurality of PGC demodulators 340 having a phase compensation function (FIG 9 shows two PGC demodulators 340 as an example). The light source 310 is coupled to a port of a fiber coupler 360, and the other port of the fiber coupler 360 is coupled to each fiber interferometer 320. Furthermore, each optical receiver 330 is coupled with one of the fiber interferometers 320, and each PGC demodulator 340 having a phase compensation function is coupled with one of the optical receivers 330.

Each PGC demodulator 340 having a phase compensation function of the fiber interferometric sensor 300' of this embodiment may be used to compensate the demodulated sensing phase signal, so it can be ensured that the intensity of the sensing phase signal demodulated by each PGC demodulator 340 having a phase compensation function is a maximum value.

In summary, in the fiber interferometric sensor and the phase compensation method of the PGC demodulator of the present invention, as phase angles are compensated for the fundamental carrier and the second harmonic carrier by two phase compensators respectively, the intensity of the sensing phase signal output by the fiber interferometric sensor can be kept at a maximum value. In other words, the fiber interferometric sensor and the phase compensation method of the PGC demodulator of the present invention enable the sensing phase signal to have a most preferred signal-to-noise ratio.

It will be apparent to those skilled in the art that various modifications and variations can be made to the structure of the present invention without departing from the scope or spirit of the invention. In view of the foregoing, it is intended that the present invention cover modifications and variations of this invention provided they fall within the scope of the following claims.

**Claims**

1. A fiber interferometric sensor 300, comprising:

   a light source 310;
   at least one fiber interferometer 320 coupled to the light source 310 and suitable for outputting an optical interference signal according to a sensed variation of a physical field;
   at least one optical receiver 330 coupled to the fiber interferometer 320 and suitable for converting the optical interference signal into an electrical signal; and
   at least one phase-generated carrier demodulator having a phase compensation function, coupled to the optical receiver 330 and suitable for demodulating the electrical signal to generate a sensing phase signal, wherein the phase-generated carrier demodulator having a phase compensation function has a processing unit 342 and two phase compensators 344, 346, and the processing unit 342 is suitable for generating a fundamental carrier and a second harmonic carrier for demodulating the electrical signal, and one of the phase compensators 344, 346 is suitable for compensating a first phase angle for the fundamental carrier, and the other of the phase compensators 344, 346 is suitable for compensating a second phase angle for the second harmonic carrier.

2. A fiber interferometric sensor 300 as claimed in claim 1, wherein the fiber interferometer 320 is a Michelson interferometer, a Mach-Zehnder interferometer, or a Sagnac interferometer.

3. A fiber interferometric sensor 300 as claimed in claim 1 or claim 2, wherein the fiber interferometer 320 comprises:

   a 3-port optical circulator 322 having a first port 1, a second port 2, and a third port 3, wherein the light source 310 is coupled to the first port 1, and the optical receiver 330 is coupled to the third port 3;
   a fiber coupler 324;
   a leading fiber 326 coupled between a port of the fiber coupler 324 and the second port 2;
   two fiber arms 327a, 327b, a port of each fiber arm 327a, 327b being coupled to the other port of the fiber coupler 324; and
   two reflecting components 328a, 328b coupled to the other port of one of the fiber arms 327a, 327b, respectively.

4. A fiber interferometric sensor 300 as claimed in claim 3, further comprising a PZT phase modulator 350 coupled to one of the fiber arms 327a, 327b.

5. A fiber interferometric sensor 300 as claimed in claim 3 or claim 4, wherein the reflecting components 328a, 328b are Faraday rotator mirrors.

6. A fiber interferometric sensor 300 as claimed in any preceding claim, further comprising a function generator coupled to the light source 310.

7. A fiber interferometric sensor 300 as claimed in any preceding claim, wherein the first phase angle is between 0° and 180°, and the second phase angle is between 0° and 180°.

8. A fiber interferometric sensor 300 as claimed in any preceding claim, wherein the light source 310 is a laser.

9. A phase compensation method of a phase-generated carrier demodulator for a fiber interferometric sensor 300, comprising:

generating a carrier phase signal by the fiber interferometric sensor 300 and inputting a simulation signal into the fiber interferometric sensor 300 to generate an electrical signal;
generating a first carrier and a second carrier by a phase-generated carrier demodulator having a phase compensation function of the fiber interferometric sensor for demodulating the electrical signal;
compensating a first reference phase angle for the first carrier and compensating a plurality of different phase angles for the second carrier to find out a phase angle compensated for the second carrier when the intensity of a demodulated output simulation signal is a first relative maximum value;
compensating a second reference phase angle for the first carrier and compensating a plurality of different phase angles for the second carrier to find out a phase angle compensated for the second carrier when the intensity of the demodulated output simulation signal is a second relative maximum value;
finding out the greater one between the first relative maximum value and the second relative maximum value to determine a phase angle $\theta1$ to be compensated for the second carrier; and
compensating the phase angle $\theta1$ for the second carrier and compensating a plurality of different phase angles for the first carrier to fmd out a phase angle $\theta2$ compensated for the first carrier when the intensity of the demodulated output simulation signal is a third relative maximum value, wherein the phase angle $\theta2$ is a phase angle to be compensated for the first carrier.

10. A method as claimed in claim 9, wherein the first carrier is a fundamental carrier, and the second carrier is a second harmonic carrier.

11. A method as claimed in claim 9, wherein the first carrier is a second harmonic carrier, and the second carrier is a fundamental carrier.

12. A method as claimed in claim any of claims 9 to 11, wherein the process of inputting the simulation signal into the fiber interferometric sensor 300 involves inputting the simulation signal into the fiber interferometric sensor 300 by a PZT phase modulator 350.

13. A method as claimed in any of claims 9 to 11, wherein the process of inputting the simulation signal into the fiber interferometric sensor 300 involves performing a current modulation on a light source 310 of the fiber interferometric sensor 300 to generate the simulation signal.

14. A method as claimed in any of claims 9 to 13, wherein the first reference phase angle and the second reference phase angle differ by 90°.

15. A method as claimed in any of claims 9 to 13, wherein the first reference phase angle is 0°, and the second reference phase angle is 90°.

16. A method as claimed in claim 9, wherein the process of compensating for the first carrier and the second carrier involves compensating for the first carrier and the second carrier by two phase compensators of the phase-generated carrier demodulator having a phase compensation function.

**Patentansprüche**

1.  Interferometrischer Fasersensor (300), umfassend:

    eine Lichtquelle (310);
    mindestens ein Faserinterferometer (320), das an die Lichtquelle (310) gekoppelt ist und geeignet ist, ein optisches Interferenzsignal gemäß einer ermittelten Variation eines physikalischen Felds auszugeben;
    mindestens einen optischen Empfänger (330), der an das Faserinterferometer (320) gekoppelt ist und geeignet ist, das optische Interferenzsignal in ein elektrisches Signal umzuwandeln; und
    mindestens einen phasenerzeugten Trägerdemodulator mit einer Phasenkompensationsfunktion, der an den optischen Empfänger (330) gekoppelt ist und geeignet ist, das elektrische Signal zu demodulieren, um ein abtastendes Phasensignal zu erzeugen, worin der phasenerzeugte Trägerdemodulator mit einer Phasenkompensationsfunktion eine Verarbeitungseinheit (342) und zwei Phasenkompensatoren (344, 346) hat und die Verarbeitungseinheit (342) geeignet ist, eine Grundfrequenz als Träger und eine zweite Harmonische als Träger zum Demodulieren des elektrischen Signals zu erzeugen, und einer der Phasenkompensatoren (344, 346) geeignet ist, einen ersten Phasenwinkel für die Grundfrequenz als Träger zu kompensieren, und der andere der Phasenkompensatoren (344, 346) geeignet ist, einen zweiten Phasenwinkel für die zweite Harmonische als Träger zu kompensieren.

2.  Interferometrischer Fasersensor (300) nach Anspruch 1, worin das Faserinterferometer (320) ein Michelson-Interferometer, ein Mach-Zehnder-Interferometer oder ein Sagnac-Interferometer ist.

3.  Interferometrischer Fasersensor (300) nach Anspruch 1 oder Anspruch 2, worin das Faserinterferometer (320) umfasst:

    einen 3-Port optischen Zirkulator (322) mit einem ersten Port 1, einem zweiten Port 2 und einem dritten Port 3, worin die Lichtquelle (310) an den ersten Port gekoppelt ist und der optische Empfänger (330) an den dritten Port 3 gekoppelt ist;
    einen Faserkoppler (324);
    eine Leitfaser (326), die zwischen einem Port des Faserkopplers (324) und dem zweiten Port 2 gekoppelt ist;
    zwei Faserzweige (327a, 327b), wobei ein Port eines jeden Faserzweigs (327a, 327b) an den anderen Port des Faserkopplers (324) gekoppelt ist; und
    zwei reflektierende Bauteile (328a, 328b), die an den anderen Port von einem der Faserzweige 327a bzw. 327b gekoppelt sind.

4.  Interferometrischer Fasersensor (300) nach Anspruch 3, der außerdem einen PZT-Phasenmodulator (350) umfasst, der an einen der Faserzweige (327a, 327b) gekoppelt ist.

5.  Interferometrischer Fasersensor (300) nach Anspruch 3 oder Anspruch 4, worin die reflektierenden Bauteile (328a, 328b) Faraday-Rotationsspiegel sind.

6.  Interferometrischer Fasersensor (300) nach einem vorhergehenden Anspruch, der außerdem einen an eine Lichtquelle (310) gekoppelten Funktionsgenerator (310) umfasst.

7.  Interferometrischer Fasersensor (300) nach einem vorhergehenden Anspruch, worin der erste Phasenwinkel zwischen 0° und 180° liegt und der zweite Phasenwinkel zwischen 0° und 180° liegt.

8.  Interferometrischer Fasersensor (300) nach einem vorhergehenden Anspruch, worin die Lichtquelle (310) ein Laser ist.

9.  Phasenkompensationsverfahren eines phasenerzeugten Trägerdemodulators für einen interferometrischen Fasersensor (300), umfassend:

    Erzeugen eines Trägerphasensignals durch den interferometrischen Fasersensor (300) und Eingeben eines Simulationssignals in den interferometrischen Fasersensor (300), um ein elektrisches Signal zu erzeugen;
    Erzeugen eines ersten Trägers und eines zweiten Trägers durch einen phasenerzeugten Trägerdemodulator mit einer Phasenkompensationsfunktion des interferometrischen Fasersensors zum Demodulieren des elektrischen Signals;

Kompensieren eines ersten Referenzphasenwinkels für den ersten Träger und Kompensieren einer Vielzahl von verschiedenen Phasenwinkeln für den zweiten Träger, um einen für den zweiten Träger kompensierten Phasenwinkel aufzufinden, wenn die Intensität eines demodulierten Ausgangssimulationssignals ein erster relativer Maximalwert ist;

Kompensieren eines zweiten Referenzphasenwinkels für den ersten Träger und Kompensieren einer Vielzahl von verschiedenen Phasenwinkeln für den zweiten Träger, um einen für den zweiten Träger kompensierten Phasenwinkel aufzufinden, wenn die Intensität des demodulierten Ausgangssimulationssignals ein zweiter relativer Maximalwert ist;

Auffinden des größeren Werts vom ersten relativen Maximalwert und zweiten relativen Maximalwert, um einen Phasenwinkel $\theta 1$ zu bestimmen, der für den zweiten Träger zu kompensieren ist; und

Kompensieren des Phasenwinkels $\theta 1$ für den zweiten Träger und Kompensieren einer Vielzahl von verschiedenen Phasenwinkeln für den ersten Träger, um einen Phasenwinkel $\theta 2$ aufzufinden, der für den ersten Träger kompensiert ist, wenn die Intensität des demodulierten Ausgangssimulationssignals ein dritter relativer Maximalwert ist, worin der Phasenwinkel 82 ein Phasenwinkel ist, der für den ersten Träger zu kompensieren ist.

**10.** Verfahren nach Anspruch 9, worin der erste Träger eine Grundfrequenz ist und der zweite Träger eine zweite Harmonische ist.

**11.** Verfahren nach Anspruch 9, worin der erste Träger eine zweite Harmonische ist und der zweite Träger eine Grundfrequenz ist.

**12.** Verfahren nach einem der Ansprüche 9 bis 11, worin der Prozess des Eingebens des Simulationssignals in den interferometrischen Fasersensor (300) mit dem Eingeben des Simulationssignals in den interferometrischen Fasersensor (300) durch einen PZT-Phasenmodulator (350) verbunden ist.

**13.** Verfahren nach einem der Ansprüche 9 bis 11, worin der Prozess des Eingebens des Simulationssignals in den interferometrischen Fasersensor (300) mit dem Ausführen einer Strommodulation auf einer Lichtquelle (310) des interferometrischen Fasersensors (300) verbunden ist, um das Simulationssignal zu erzeugen.

**14.** Verfahren nach einem der Ansprüche 9 bis 13, worin sich der ersten Referenzphasenwinkel und der zweite Referenzphasenwinkel um 90° unterscheiden.

**15.** Verfahren nach einem der Ansprüche 9 bis 13, worin der ersten Referenzphasenwinkel gleich 0° ist und der zweite Referenzphasenwinkel gleich 90° ist.

**16.** Verfahren nach Anspruch 9, worin der Prozess des Kompensierens für den ersten Träger und den zweiten Träger mit dem Kompensieren für den ersten Träger und den zweiten Träger durch zwei Phasenkompensatoren des phasenerzeugten Trägerdemodulators verbunden ist, der eine Phasenkompensationsfunktion hat.

**Revendications**

**1.** Capteur interférométrique à fibres (300) comprenant :

une source de lumière (310) ;
au moins un interféromètre à fibres (320) couplé à la source de lumière (310) et approprié pour délivrer un signal d'interférence optique en fonction d'une variation détectée d'un champ physique ;
au moins un récepteur optique (330) couplé à l'interféromètre à fibres (320) et approprié pour convertir le signal d'interférence optique en un signal électrique ; et
au moins un démodulateur à porteuses à phases générées ayant une fonction de compensation de phase, couplé au récepteur optique (330) et approprié pour démoduler le signal électrique pour générer un signal de phase de détection, dans lequel le démodulateur à porteuses à phases générées ayant une fonction de compensation de phase comporte une unité de traitement (342) et deux compensateurs de phase (344, 346), et l'unité de traitement (342) est appropriée pour générer une porteuse de fondamental et une porteuse de deuxième harmonique pour démoduler le signal électrique, et l'un des compensateurs de phase (344, 346) est approprié pour compenser un premier angle de phase pour la porteuse de fondamental, et l'autre des compensateurs de phase (344, 346) est approprié pour compenser un deuxième angle de phase pour la porteuse de deuxième harmonique.

**2.** Capteur interférométrique à fibres (300) selon la revendication 1, dans lequel l'interféromètre à fibres (320) est un interféromètre de Michelson, un interféromètre de Mach-Zehnder, ou un interféromètre de Sagnac.

**3.** Capteur interférométrique à fibres (300) selon la revendication 1 ou la revendication 2, dans lequel l'interféromètre à fibres (320) comprend :

un circulateur optique à 3 voies (322) ayant un premier port (1), un deuxième port (2) et un troisième port (3), dans lequel la source de lumière (310) est couplée au premier port (1), et le récepteur optique (330) est couplé au troisième port (3) ;
un coupleur à fibres (324) ;
une fibre avant (326) couplée entre un port du coupleur à fibres (324) et le deuxième port (2) ;
deux branches de fibre (327a, 327b), un port de chaque branche de fibre (327a, 327b) étant couplé à l'autre port du coupleur à fibres (324) ; et
deux composants de réflexion (328a, 328b) couplés à l'autre port de l'une des branches de fibre (327a, 327b), respectivement.

**4.** Capteur interférométrique à fibres (300) selon la revendication 3, comprenant en outre un modulateur de phase à PZT (350) couplé à l'une des branches de fibre (327a, 327b).

**5.** Capteur interférométrique à fibres (300) selon la revendication 3 ou la revendication 4, dans lequel les composants de réflexion (328a, 328b) sont des miroirs rotateurs de Faraday.

**6.** Capteur interférométrique à fibres (300) selon l'une quelconque des revendications précédentes, comprenant en outre un générateur de fonction couplé à la source de lumière (310).

**7.** Capteur interférométrique à fibres (300) selon l'une quelconque des revendications précédentes, dans lequel le premier angle de phase est compris entre 0° et 180°, et le deuxième angle de phase est compris entre 0° et 180°.

**8.** Capteur interférométrique à fibres (300) selon l'une quelconque des revendications précédentes, dans lequel la source de lumière (310) est un laser.

**9.** Procédé de compensation de phase d'un démodulateur à porteuses à phases générées pour un capteur interférométrique à fibres (300), comprenant les étapes consistant à :

générer un signal de phase de porteuse par le capteur interférométrique à fibres (300) et appliquer un signal de simulation dans le capteur interférométrique à fibres (300) pour générer un signal électrique ;
générer une première porteuse et une deuxième porteuse par un démodulateur à porteuses à phases générées ayant une fonction de compensation de phase du capteur interférométrique à fibres pour démoduler le signal électrique ;
compenser un premier angle de phase de référence pour la première porteuse et compenser une pluralité d'angles de phase différents pour la deuxième porteuse pour trouver un angle de phase compensé pour la deuxième porteuse lorsque l'intensité d'un signal de simulation de sortie démodulé a une première valeur maximum relative ;
compenser un deuxième angle de phase de référence pour la première porteuse et compenser une pluralité d'angles de phase différents pour la deuxième porteuse pour trouver un angle de phase compensé pour la deuxième porteuse lorsque l'intensité du signal de simulation de sortie démodulé a une deuxième valeur maximum relative ;
trouver la plus grande de la première valeur maximum relative et de la deuxième valeur maximum relative pour déterminer un angle de phase θ1 à compenser pour la deuxième porteuse ; et
compenser l'angle de phase θ1 pour la deuxième porteuse et compenser une pluralité d'angles de phase différents pour la première porteuse pour trouver un angle de phase θ2 compensé pour la première porteuse lorsque l'intensité du signal de simulation de sortie démodulé a une troisième valeur maximum relative, dans lequel l'angle de phase θ2 est un angle de phase à compenser pour la première porteuse.

**10.** Procédé selon la revendication 9, dans lequel la première porteuse est une porteuse de fondamental, et la deuxième porteuse est une porteuse de deuxième harmonique.

**11.** Procédé selon la revendication 9, dans lequel la première porteuse est une porteuse de deuxième harmonique, et la deuxième porteuse est une porteuse de fondamental.

**12.** Procédé selon l'une quelconque des revendications 9 à 11, dans lequel le processus d'application du signal de simulation dans le capteur interférométrique à fibres (300) implique l'application du signal de simulation dans le capteur interférométrique à fibres (300) par un modulateur de phase à PZT (350).

**13.** Procédé selon l'une quelconque des revendications 9 à 11, dans lequel le processus d'application du signal de simulation dans le capteur interférométrique à fibres (300) implique l'application d'une modulation de courant à une source de lumière (310) du capteur interférométrique à fibres (300) pour générer le signal de simulation.

**14.** Procédé selon l'une quelconque des revendications 9 à 13, dans lequel le premier angle de phase de référence et le deuxième angle de phase de référence diffèrent de 90°.

**15.** Procédé selon l'une quelconque des revendications 9 à 13, dans lequel le premier angle de phase de référence est égal à 0°, et le deuxième angle de phase de référence est égal à 90°.

**16.** Procédé selon la revendication 9, dans lequel le processus de compensation pour la première porteuse et pour la deuxième porteuse implique la compensation pour la première porteuse et pour la deuxième porteuse par deux compensateurs de phase du démodulateur à porteuses à phases générées ayant une fonction de compensation de phase.

FIG. 1 (PRIOR ART)

FIG. 2 (PRIOR ART)

FIG. 3A

FIG. 3B

300

generating a carrier phase signal by the fiber interferometric sensor and inputting a simulation signal into the fiber interferometric sensor to generate an electrical signal —S110

generating a first carrier and a second carrier by a PGC demodulator having a phase compensation function of the fiber interferometric sensor for demodulating the electrical signal —S120

compensating a first reference phase angle for the first carrier and compensating a plurality of different phase angles for the second carrier to find out a phase angle compensated for the second carrier when the intensity of a demodulated output simulation signal is a first relative maximum value —S130

compensating a second reference phase angle for the first carrier and compensating a plurality of different phase angles for the second carrier to find out a phase angle compensated for the second carrier when the intensity of the demodulated output simulation signal is a second relative maximum value —S140

finding out the greater one between the first relative maximum value and the second relative maximum value to determine a phase angle $\theta 1$ to be compensated for the second carrier —S150

compensating the phase angle $\theta 1$ for the second carrier and compensating a plurality of different phase angles for the first carrier to find out a phase angle $\theta 2$ compensated for the first carrier when the intensity of the demodulated output simulation signal is a third relative maximum value, wherein the phase angle $\theta 2$ is a phase angle to be compensated for the first carrier —S160

## FIG. 4

fundamental
square wave

interference
signal

carrier
signal

FIG. 5

simulation
signal

demodulated
output
simulation
signal

FIG. 6

simulation signal

demodulated output simulation signal

FIG. 7

simulation signal

demodulated output simulation signal

FIG. 8

FIG. 9